# EUROPÄISCHE PATENTSCHRIFT

(11) **EP 0 850 602 B1**
(45) Veröffentlichungstag und Bekanntmachung des Hinweises auf die Patenterteilung: **09.07.2003**
(21) Anmeldenummer: 97121559.5
(22) Anmeldetag: 08.12.1997
(51) Int. Cl.: A61C 17/34

(54) **Elektrische Zahnbürste**
Electric toothbrush
Brosse à dents électrique

(30) Priorität: 24.12.1996 DE 19654319
(43) Veröffentlichungstag der Anmeldung: 01.07.1998
(73) Patentinhaber: ROWENTA-WERKE GmbH, D-63071 Offenbach am Main (DE)
(72) Erfinder: Hahn, Matthias Dipl.-Ing., 60598 Frankfurt (DE); Höfer, Klaus Dr.-Ing., 63457 Hanau (DE); Rühmkorff, Andreas Dipl.-Ing.(FH), 63128 Dietzenbach (DE)

(56) Entgegenhaltungen:
- EP-A- 0 691 107
- DE-A- 3 931 982
- DE-B- 1 657 286
- DE-U- 29 515 288

## Beschreibung

Die Erfindung betrifft eine elektrische Zahnbürste gemäß dem Oberbegriff des Anspruches 1. Eine solche Zahnbürste ist z.B. aus Dokument EP-A- 0 691 107 bekannt. Elektrische Zahnbürsten bestehen aus einem Handgriff, in dem der elektrische Antrieb untergebracht ist, einem Bürstenkopf und einem den Bürstenkopf mit dem Handgriff verbindenden Schaft. Es sind elektrische Zahnbürsten bekannt, bei denen der Antrieb aus einem Rotationsmotor besteht, auf dessen Wellenstumpf freitragend eine Unwucht befestigt ist. Diese Unwucht liegt dicht am Motor im Handgriff. Der Nachteil dieser Konstruktion besteht einerseits darin, daß der Handgriff stark von den durch die Unwucht erzeugten Schwingungen (Vibrationen) beeinflußt wird, was für den Benutzer unangenehm ist, und andererseits darin, daß der Einfluß der Unwucht auf den Bürstenkopf relativ schwach ist. Ein weiterer Nachteil besteht darin, daß der Motor durch die auf seiner Welle fliegend angeordnete Unwucht stark beansprucht wird, wodurch seine Lebensdauer verkürzt wird.

Der Erfindung liegt die Aufgabe zugrunde, eine elektrische Zahnbürste gemäß dem Oberbegriff des Anspruches 1 zu entwickeln, die von den vorgenannten Nachteilen einer starken Vibration des Handgriffes, einer schlechten Übertragung der Schwingungen auf den Bürstenkopf und einer starken Beanspruchung des Motors weitgehend befreit ist.

Zur Lösung dieser Aufgabe wird eine elektrische Zahnbürste gemäß dem Oberbegriff des Anspruches 1 vorgeschlagen, welche erfindungsgemäß die im kennzeichnenden Teil des Anspruches 1 genannten Merkmale hat.

Weitere Ausgestaltungen der Erfindung sind in den Unteransprüchen genannt.

Durch die Verlagerung der Unwucht an eine Stelle nahe am oder im Bürstenkopf werden die durch die Unwucht erzeugten Vibrationen in hohem Maße auf den Bürstenkopf übertragen, während sie den Handgriff nur wenig beeinflussen.

Anhand des in den Figuren gezeigten Ausführungsbeispiels soll die Erfindung näher erläutert werden. Es zeigen
- Figur 1: eine Seitenansicht eines Ausführungsbeispiels einer elektrischen Zahnbürste gemäß der Erfindung, teilweise im Schnitt,
- Figur 2: die Zahnbürste gemäß Figur 1 in entsprechender Darstellung in einer um 90 Grad versetzten Blickrichtung.

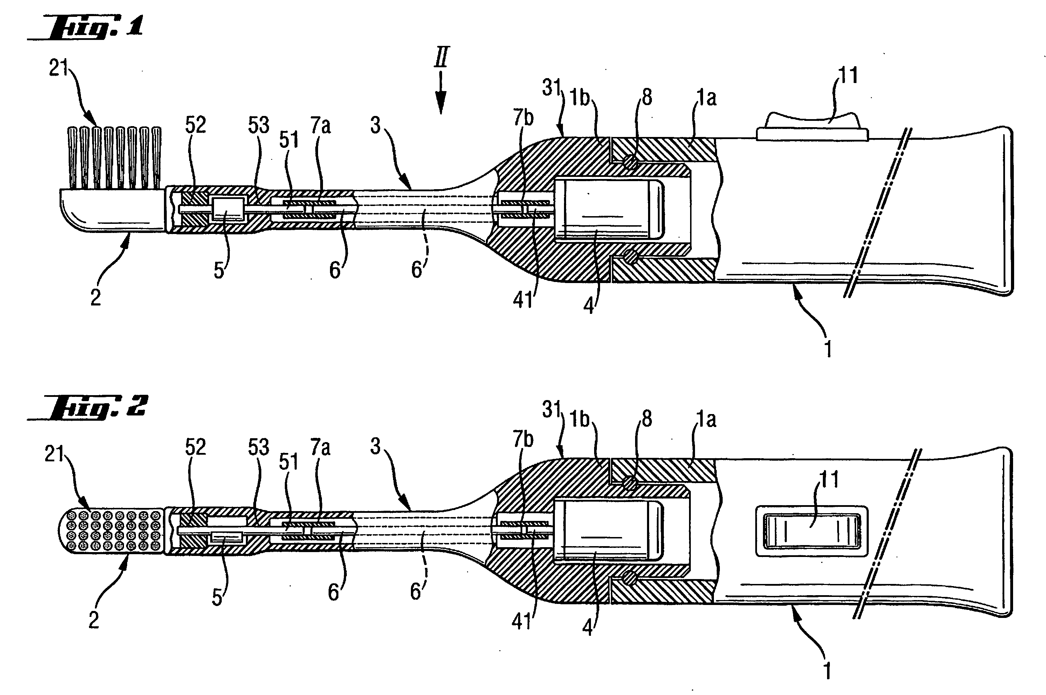

In Figur 1 ist der als Gehäuse ausgebildete Handgriff mit 1 bezeichnet, der Bürstenkopf mit 2 und der den Bürstenkopf mit dem Handgriff verbindende Schaft mit 3. Der Handgriff wird im wesentlichen gebildet von dem Handgriffgehäuse la. Im gezeigten Ausführungsbeispiel ist der Schaft 3 an seinem griffseitigen Ende mit einem im Durchmesser stark erweiterten Abschnitt (Schaftanschlußstück) 31 versehen, der den vorderen, zum Bürstenkopf hin gelegenen Teil 1b des Handgriffs 1 bildet. In diesem erweiterten Schaftanschlußstück 31 ist der Motor 4 untergebracht. Die nicht dargestellte elektrische Zuleitung zum Motor ist durch den Griff 1 über den Schalter 11 geführt.

Die Unwucht 5 ist am bürstenkopfseitigen Ende des Schaftes dicht am Bürstenkopf 2 angeordnet. Sie ist mit einer eigenen Welle 51 versehen, die beidseitig in den Lagern 52, 53 gelagert ist. Die Antriebswelle ist bis zu der Unwuchtwelle 51 verlängert, und zwar mittels einer Zwischenwelle 6, die den Motorwellenstumpf 41 mit der Unwuchtwelle 51 verbindet. Die Verbindungen bestehen vorzugsweise aus flexiblen Kupplungen, die in dem gezeigten Ausführungsbeispiel aus kurzen, durch Reibung auf den Wellenenden haftenden Rohr- oder Schlauchstücken 7a, 7b bestehen. Der das Borstenfeld 21 tragende Bürstenkopf 2 ist an das freien Ende des Schaftes in einer nicht dargestellten bekannten Weise befestigt, zum Beispiel durch Aufstecken mittels eines Clipverschluß.

Bei Betrieb der Zahnbürste rotiert die Unwucht, wodurch die auftretende Zentrifugalkraft zu starken Schwingungen führt, die sich um so stärker am Bürstenkopf auswirken, je dichter die Unwucht am Bürstenkopf angeordnet ist. Umgekehrt werden diese Schwingungen zum Handgriff hin weitgehend gedämpft bzw. entkoppelt, und zwar einerseits durch die Verwendung flexibler Kupplungen 7a, 7b und andererseits durch die Ausbildung der Zwischenwelle 6 aus flexiblem Material. Eine weitere Entkopplung der Schwingungen vom Hauptteil 1a des Handgriffes, der von der Hand des Benutzers gehalten wird, wird durch die Anordnung des Motors in dem erweiterten Schaftende 31 erreicht, und zwar insbesondere durch einen dämpfenden O-Ring 8, der zwischen den verbindenden Anlageflächen von Schaftende 31 und Hauptgriffteil 1a angeordnet ist.

Im gezeigten Ausführungsbeispiel wird das linke Lager der Unwuchtwelle 51 von einem selbständigen in den Schaft eingesetzten Ring 52 gebildet, während das Lager 53 unmittelbar von Teilen der inneren Schaftwand gebildet wird, die in Richtung zur Mittellinie des Schaftes hin vorgezogen sind. Selbstverständlich kann auch das letztgenannte Lager aus einem eingesetzten selbständigen Lagerring bestehen.

Das in den Figuren gezeigte Ausführungsbeispiel kann in vielfacher Weise variiert werden. Die selbständige Zwischenwelle 6 kann entfallen, indem entweder die Motorwelle integral bis zur Kupplung 7a der Unwuchtwelle verlängert wird oder umgekehrt, die Unwuchtwelle integral bis zur Kupplung 7b am Wellenstumpf 41 verlängert wird. Im Prinzip ist es auch möglich, daß die Unwucht 5 auf einer integral bis zum Bürstenkopf verlängerten Motorwelle sitzt, die dicht am Bürstenkopf zusätzlich gelagert ist, jedoch ist diese Ausführung herstellungsmäßig wenig geeignet.

Die Unwucht kann, statt wie im Ausführungsbeispiel zweiseitig gelagert zu sein, auch nur einseitig auf der einen oder anderen Seite gelagert sein.

Die Unwucht kann bei einer entsprechenden Konstruktion des Bürstenkopfes in diesem selbst angeordnet sein. Es ist auch möglich, daß eines der Unwuchtlager im Bürstenkopf und das andere im Schaft liegt. In diesen Fällen muß allerdings jeder der auswechselbaren Bürstenköpfe mit einer Unwucht beziehungsweise einem Unwuchtlager versehen sein. Die Unwuchtwelle wird dabei beim Wechseln des Bürstenkopfes aus einem der Lager herausgezogen.

Es versteht sich, daß das griffseitige Ende des Schaftes auch anders ausgebildet und im Durchmesser kleiner sein kann, und der Motor weiter hinten im eigentlichen Griffteil 1a angeordnet sein kann.

Schließlich ist es auch denkbar, den Schaft nahe dem Handgriff, aber, im Sinne der Zeichnung, links vom Motor mit einer Trennstelle zu versehen, die es erlaubt, den Bürstenkopf zusammen mit dem größeren Teil des Schaftes auszuwechseln. Die verlängerte Antriebswelle ist dann an dieser Stelle unterteilt und mit einer Steckkupplung ähnlich der in den Figuren bei 7a gezeigten Kupplung versehen.

## Patentansprüche

1. Elektrische Zahnbürste mit einem Griff (1), einem Bürstenkopf (2) und einem Schaft (3), der den Griff mit dem Bürstenkopf verbindet, und mit einem im Griff angeordneten Rotationsmotor (4), der eine Unwucht (5) antreibt, **dadurch gekennzeichnet, daß** die vom Motor (4) angetriebene Unwucht (5) im Schaft (3) und/oder im Bürstenkopf (2) einseitig oder doppelseitig gelagert ist und über eine verlängerte Antriebswelle (6) angetrieben wird.

2. Elektrische Zahnbürste nach Anspruch 1, **dadurch gekennzeichnet, daß** die im Schaft (2) gelagerte Unwucht (5) möglichst dicht am Bürstenkopf (2) liegt.

3. Elektrische Zahnbürste nach Anspruch 1 oder 2, **dadurch gekennzeichnet, daß** die verlängerte Antriebswelle aus einer Zwischenwelle (6) besteht, die motorseitig an den Wellenstumpf (41) des Motors (4) gekuppelt ist und bürstenkopfseitig an die Welle (51) der selbständige gelagerte Unwucht (5) gekuppelt ist.

4. Elektrische Zahnbürste nach Anspruch 1 oder 2, **dadurch gekennzeichnet, daß** die verlängerte Motorwelle aus einer integralen Verlängerung der Motorwelle besteht, die an die Welle (51) der selbständige gelagerte Unwucht gekuppelt ist.

5. Elektrische Zahnbürste nach Anspruch 1 oder 2, **dadurch gekennzeichnet, daß** die verlängerte Antriebswelle aus einer integralen Verlängerung der Welle (51) der selbständige gelagerte Unwucht besteht, die an den Wellenstumpf (41) des Motors gekuppelt ist.

6. Elektrische Zahnbürste nach einem der vorhergehenden Ansprüche, **dadurch gekennzeichnet, daß** die verlängerte Antriebswelle aus flexiblem Material besteht.

7. Elektrische Zahnbürste nach einem der vorhergehenden Ansprüche, **dadurch gekennzeichnet, daß** die an der verlängerten Antriebswelle vorhandenen Kupplungen (7a,7b) derart flexible aufgebaut sind, daß die von der Unwucht beim Betrieb ausgehenden Schwingungen zum Griff hin gedämpft beziehungsweise entkoppelt werden.

8. Elektrische Zahnbürste nach Anspruch 7, **dadurch gekennzeichnet, daß** die Kupplungen aus kurzen, durch Reibung auf den Wellenende haftenden Rohr- oder Schlauchstücken (7a,7b) aus flexiblem Material bestehen.

9. Elektrische Zahnbürste nach einem der vorhergehenden Ansprüche, **dadurch gekennzeichnet, daß** der Schaft (3) griffseitig so ausgebildet ist, daß er den vordersten Teil (1b) des Griffes (1) bildet und daß der Motor (4) in diesem Teil (1b) des Griffes (Schaftes) untergebracht ist.

10. Elektrische Zahnbürste nach Anspruch 9, **dadurch gekennzeichnet, daß** die Verbindung zwischen dem vom Schaft (3) gebildeten Griffteil (1b) und dem restlichen Griff über dämpfende Verbindungsglieder, zum Beispiel O-Ringe (8), erfolgt.

11. Elektrische Zahnbürste nach einem der vorhergehenden Ansprüche, **dadurch gekennzeichnet, daß** der Schaft (3) nahe dem Handgriff (1), aber noch, vom Bürstenkopf aus gesehen, vor dem Motor mit einer Trennstelle versehen ist, die es erlaubt, den Bürstenkopf (2) zusammen mit dem größeren Teil des Schaftes (3) auszuwechseln, wobei die verlängerte Antriebswelle an dieser Trennstelle unterteilt und mit einer Kupplung.versehen ist.

## Claims

1. An electric toothbrush, comprising of a handle (1) and a brush head (2), a shank (3) that connects the handle (1) to the brush head (2) and a rotary motor (4) arranged in the handle (1) to drive an unbalanced mass (5),
**characterised in that** the unbalanced mass (5) supported on at least one side in one of the shank (3) and/or the brush head (2) is driven by an extended drive shaft (6) connected between the motor (4) and the unbalanced mass (5).

2. An electric toothbrush according to claim 1, **characterised in that** the unbalanced mass (5) is arranged in the shank (3) so as to be as close as possible to the brush head (2).

3. An electric toothbrush according to claim 1 or 2,
**characterised in that** the unbalanced mass (5) has a shaft (51) and the motor (4) has a shaft butt (41), the extended drive shaft consisting of an intermediate shaft (6) is coupled at the first end to the shaft butt (41) of the motor (4) and at the second end to the shaft (51) of the unbalanced mass (5).

4. An electric toothbrush according to claim 1 or 2,
**characterised in that** the unbalanced mass (5) has a shaft (51) and the motor (4) has a shaft butt (41), the extended drive shaft (6) being formed as one piece with the shaft butt (41) and being coupled to the shaft (51) of the unbalanced mass (5).

5. An electric toothbrush according to claim 1 or 2,
**characterised in that** the unbalanced mass (5) has a shaft and the motor (4) has a shaft butt, the extended drive shaft (6) being formed as one piece with the shaft (51) of the unbalanced mass (5) and being coupled to the shaft butt (41) of the motor (4).

6. An electric toothbrush according to claim 1, **characterised in that** the extended drive shaft (6) is made of flexible material.

7. An electric toothbrush according to one of the preceding claims , **characterised in that** couplings (7a,7b) are arranged on the extended drive shaft (6) so as to form flexible parts, the oscillations originating from the unbalanced mass (5) in operation are one of damped and decoupled in a direction towards the handle (1).

8. An electric toothbrush according to claim 7, **characterised in that** the couplings (7a,7b) are consisting of short lengths of tubular flexible material that frictionally adhere to the ends of the extended drive shaft (6).

9. An electric toothbrush according to claim 1, **characterised in that** the shank (3) is constructed on a side facing the handle (1) so as to form the foremost part (1b) of the handle (1), the motor (4) being accommodated in the foremost part (1b) of the handle.

10. An electric toothbrush according to claim 9, **characterised in that** damping connection means, e.g. O-rings, that are provided for connecting the foremost part (1b) formed by the shank (3) to a remaining part of the handle (1).

11. An electric toothbrush according to one of the preceding claims , **characterised in that** the shank (3) is configured to have a point of separation near the handle (1) but in front of the motor (4), as viewed from the brush head (2), the point of separation being configured to permit the brush head (2) to be exchanged together with a substantial portion of the shank (3), the extended drive shaft being partitioned at this point of separation, and a shaft coupling , being provided on the extended drive shaft (6) at the point of separation.

## Revendications

1. Brosse à dents électrique comportant une poignée (1), une tête de brosse (2) et une tige (3) reliant la poignée (1) à la tête de brosse (2), la poignée renfermant une moteur rotatif (4) qui entraîne un balourd (5), **caractérisé en ce que** le balourd (5), monté à au moins un de ses côtés dans la tige (3) et/ou dans la tête de brosse (2) est entraîné par un arbre de transmission prolongé (6) reliant le dit balourd (5) au moteur (4).

2. Brosse à dents électrique selon la revendication 1, **caractérisé en ce que** le balourd (5) monté dans la tige (3), est disposé au plus près de la tête de brosse (2).

3. Brosse à dents électrique selon l'une des revendications 1 ou 2, **caractérisé en ce que** l'arbre de transmission prolongé (6) est formé par un arbre intermédiaire étant couplé à sa première extrémité à un bout d'arbre (41) du moteur (4) et à sa seconde extrémité à un arbre (51) du balourd (5).

4. Brosse à dents électrique selon l'une des revendications 1 ou 2, **caractérisé en ce que** l'arbre de transmission prolongé (6) est formé d'un seul tenant comme rallonge d'un arbre du moteur (41), et est couplé à un arbre (51) du balourd (5).

5. Brosse à dents électrique selon l'une des revendications 1 ou 2, **caractérisé en ce que** l'arbre de transmission prolongé (6) est formé d'un seul tenant comme rallonge d'un arbre (51) du balourd (5), et est couplé au bout d'arbre (41) du moteur (4).

6. Brosse à dents électrique selon l'une des revendications précédentes, **caractérisé en ce que** l'arbre de transmission prolongé (6) est réalisé avec un matériau flexible.

7. Brosse à dents électrique selon l'une des revendications précédentes, **caractérisé en ce que** l'arbre de transmission prolongé (6) comporte des pièces d'accouplement (7a,7b) flexibles de telle sorte que les vibrations provenant du balourd (5) en action soient amorties respectivement découplées en direction de la poignée (1).

8. Brosse à dents électrique selon la revendication 7, **caractérisé en ce que** les pièces d'accouplement (7a,7b) consistent en de courtes pièces tubulaires en matériau flexible, les pièces d'accouplement (7a,7b) adhérant aux bouts de l'arbre de transmission prolongé (6) par friction.

9. Brosse à dents électrique selon l'une des revendications précédentes, **caractérisé en ce que** la tige (3) est conformée de son côté en regard de la poignée (1) de sorte qu'elle forme une partie avant (1b) de la poignée (1), cette partie avant (1b) renfermant le moteur (4).

10. Brosse à dents électrique selon la revendication 9, **caractérisé en ce que** la partie avant (1b) de la poignée (1) et le restant de la poignée (1a) sont assemblées par l'intermédiaire de moyens d'amortissement, par exemple par l'intermédiaire de joints toriques (8).

11. Brosse à dents électrique selon l'une des revendications précédentes, **caractérisé en ce que** la tige (3) présente une zone de séparation située près de la poignée (1), mais avant le moteur (4) selon une vue de la tête de brosse (2), la zone de séparation permettant le changement de la tête de brosse (2) et d'une majeure partie de la tige (3) conjointement, l'arbre de transmission prolongé (6) comportant une pièce d'accouplement dans cette zone de séparation.
